# EUROPEAN PATENT APPLICATION

(11) **EP 1 771 000 A1**
(43) Date of publication of application: **04.04.2007**
(21) Application number: 06120603.3
(22) Date of filing: 13.09.2006
(51) Int. Cl.: H04N 5/76, H04N 1/00

(54) **Printing apparatus and operating method thereof**

(30) Priority: 30.09.2005 KR 20050092138
(71) Applicant: Samsung Electronics Co., Ltd., Suwon-si, Gyeonggi-Do (KR)
(72) Inventor: Lee, Chong-wan, Seoul (KR)
(74) Representative: Clark, Charles Robert

(57) **Abstract**

A printing apparatus including a broadcast receiver to receive broadcast information and an operating method thereof. The printing apparatus can include: a central controller to convert received input data to printable output data; a display unit to display the input data or print settings of the printing apparatus; a printing unit to print the output data under the control of the central controller; and a broadcast receiver to receive broadcast information and provide the broadcast information to the central controller, wherein the central controller controls the display unit to further display the broadcast information. In addition, the central controller can control the printing unit to print image information or data information. Accordingly, a user can receive various broadcast programs using the printing apparatus and conveniently print desired information at sight.

## Description

The present general inventive concept relates to a printing apparatus, and more particularly, but not exclusively, to a printing apparatus having a function of immediately printing an image being broadcast by including a broadcast receiver to receive and process broadcast information, such as a digital multimedia broadcast (DMB), and an operating method thereof.

The personalization and miniaturization of digital devices has produced various new types of devices, including a portable printing device. Increases in the portability of digital devices have made mobile printers possible. Furthermore, photo-printers can produce high quality photographic prints immediately after photographs are taken.

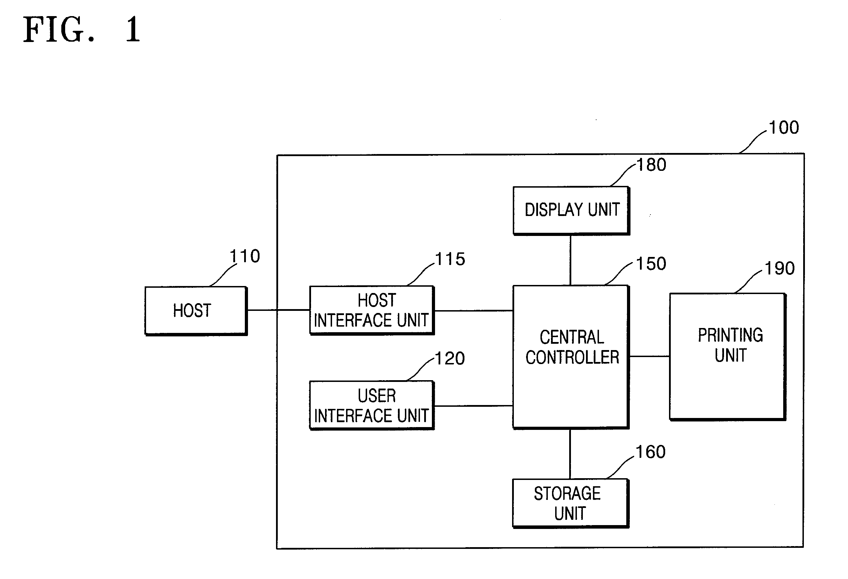

Figure 1 is a schematic block diagram of a printing apparatus 100 according to the prior art.

Referring to Figure 1, the printing apparatus 100 includes a host interface unit 115 communicating with a personal computer (PC) of a user, a storage unit 160 including semiconductor memory, such as read only memory (ROM) and random access memory (RAM), a printing unit 190 for printing images, a central controller 150 controlling the other components, a display unit 180 for displaying images, and a user interface unit 120.

A signal transmitted from an external host 110 is received by the host interface unit 115, and then, the central controller 150 generates output data for forming an image by analyzing and processing the received input data. The output data generated by the central controller 150 is printed on a medium by the printing unit 190. The user interface unit 120 generates a user input for activating or deactivating a temporary stop option or a print cancel option according to a user operation. By operating the user interface unit 120, the user can easily manage printing jobs. In this case, by displaying print options and information to be printed on the display unit 180, the printing apparatus 100 can allow the user to easily print a desired photograph with various options.

Developments in semiconductor technology have allowed functions of various devices to be combined and implemented in one device, thereby miniaturizing devices and increasing their portability. Accordingly, various services have been implemented in personal portable devices.

For example, a mobile telephone has not only a general phone call function but also a camera function, a music play function, and a video capture function. Devices such as personal digital assistants (PDAs) also provide the video capture function and a global positioning system (GPS) function.

Recently, the rapid progress of information and communication technology has allowed people to share information through broadcasts regardless of physical and spatial limitations. By the end of the 20^{th} century, PCs and the Internet have become widespread as a result of the convergence of information and communication technology and digital technology. In addition, the development of wireless communication technology has introduced mobile communication services. In particular, mobile communication has become widespread with the number of mobile communication subscribers exceeding 70% of the total population in advanced countries, including The Republic of Korea, and representing about one fourth of the world population.

Furthermore, new technologies and services, such as digital broadcast and wireless data communication, such as wireless local area network (WLAN), have made the information and communication industry a high value-added industry, and digital broadcast has expanded into areas such as High Definition Television (HDTV), multi-channel broadcast, and mobile television communication. In particular, mobile television communication is well suited to the modern commuting lifestyle, and is an up-and-coming service with wide and steady demand.

While conventional analog TV suffers from extreme flicker while moving, DMB is based on digital technology and can provide a high quality mobile TV service on a 7-inch or smaller screen as well as compact disk (CD)-grade sound quality and a data service. It is expected that the powerful multimedia competitiveness of the DMB service will lead the way in the convergence of broadcast and communication. Thus, DMB is being evaluated as a new growth engine of broadcast and communication industries. DMB has several other names around the world, such as Digital Audio Broadcast (DAB), Digital Audio Radio (DAR), Digital Radio Broadcast (DRB), and Digital Sound Broadcast (DSB), but DMB is not limited to audio data broadcasts and can include other data, such as moving picture data or the like.

However, when a user wants to print a scene while watching a DMB program, there is no method of quickly and easily printing the desired scene. Thus, the user must store the desired scene in a DMB receiver and then later connect to a printer to print the desired scene. These procedures are very time consuming, inconvenient and inefficient. For example, the user must possess a storage medium, such as a memory card or a hard disk drive, to store the DMB program, and in some cases the DMB receiver does not support a screen capture function, making the scene print function very difficult or impossible. It is also very inconvenient and sometimes difficult for the user to carry a separate printing apparatus in order to print a scene.

Thus, in general terms, it is an aim of the present invention to provide a printing apparatus that can receive DMB while moving and immediately print a desired scene while watching a DMB program.

In addition, the present invention aims to provide a printing method to select a desired scene while watching a DMB program and to print the selected scene by applying desired print options to the selected scene.

The present general inventive concept provides a printing apparatus having a function of receiving broadcast such as digital multimedia broadcast (DMB).

The present general inventive concept also provides a printing method of immediately printing image information from airwaves using a printing apparatus having a function of receiving broadcasts such as DMB.

More specifically, the present invention provides a printing apparatus including a central controller to convert received input data to printable output data, a display unit to display the input data or print settings of the printing apparatus, a printing unit to print the output data under the control of the central controller, and a broadcast receiver to receive broadcast information and provide the broadcast information to the central controller as the input data, wherein the central controller controls the display unit to further display the broadcast information.

The printing apparatus may further include a host interface unit to receive input data from an external host and provide the received input data to the central controller, a user interface unit to allow a user to input operating commands, and a storage unit to store the received broadcast information, wherein the central controller selects broadcast information desired by the user from among the broadcast information stored in the storage unit in response to an operation command of the user and converts the selected broadcast information to the output data.

The broadcast information may include video information, audio information, and data information according to a digital multimedia broadcast (DMB) program, and the central controller may control the printing unit to print the image information or the data information.

The broadcast receiver may include a tuner to select a desired signal from among orthogonal frequency division multiplexing (OFDM) modulated signals received through an antenna, a demodulator to OFDM-demodulate the signal output from the tuner, a receiver controller to process a DMB signal selected by a selection signal input from a user operating panel, a channel decoder to decode the DMB signal corresponding to a selected channel under the control of the receiver controller, and a printer interface unit to provide a signal decoded by the channel decoder to the printing unit, wherein the channel decoder includes a video decoder, an audio decoder, and a data decoder to respectively decode the video information, the audio information, and the data information.

The printing apparatus may further include a broadcast transfer unit to transmit the broadcast information received by the broadcast receiver to an external display device.

The present invention also provides a printing apparatus including a central controller to convert received input data to printable output data, the input data receivable by the central controller includes at least data received through a host interface and broadcast data, a display unit to display the input data received through the central controller or to print settings of the printing apparatus, and a printing unit to print the output data from the central controller in response to a control instruction from the central controller.

The printing apparatus may further include a user interface unit to input print commands, and a storage unit to store data received by the central controller, wherein the central controller can store portions of the received broadcast information in the storage unit, and when a print command is input, the controller controls the printing unit to print select broadcast information stored in the storage unit.

Furthermore, the present invention also provides a method of operating a printing apparatus including a broadcast receiver to receive broadcast information, the method including processing and displaying a received broadcast signal, displaying broadcast information corresponding to the processed broadcast signal, determining whether a print command is input from a user, setting print settings if the print command is input, and printing the displayed broadcast information according to the print settings.

The method may further include receiving input data from an external host, and the operation of printing the displayed broadcast information according to the print settings may include inputting an operating command from the user and selecting broadcast information desired by the user from among the broadcast information in response to the operating command of the user.

Data information may include at least one of a program schedule of content according to the DMB program and detailed information of the content.

The external host may include at least one of a computer providing video information, a camera to capture video information, and a portable memory card to store input data.

The method may further include transmitting the received broadcast information to an external display device.

Thus, broadcast information can be received and directly displayed, and desired image information among the displayed broadcast information can be immediately printed.

Further still, the present invention provides a method of printing broadcast information received from a broadcast receiver using a printing apparatus, the method including converting receivable input data to printable output data, the input data receivable including at least data received through a host interface and broadcast data, displaying the input data received or print settings of the printing apparatus, and printing the output data in response to a print command from a user interface.

The method may further include storing portions of the received broadcast information, and when the print command is received, controlling the printing unit to print stored broadcast information selected by the print command.

Embodiments of the present invention are now described by way of example, with reference to the accompanying drawings of which:
Figure 1 is a schematic block diagram of a printing apparatus according to the prior art;
Figure 2 is a schematic block diagram of a printing apparatus according to an embodiment of the present general inventive concept;
Figure 3 is a schematic block diagram of a broadcast receiver included in the printing apparatus according to an embodiment of the present general inventive concept;
Figure 4 is a perspective view of the printing apparatus according to an embodiment of the present general inventive concept;
Figure 5 is a plan view which illustrates a function of immediately printing a broadcast scene in the printing apparatus according to an embodiment of the present general inventive concept;
Figure 6 is a schematic diagram which illustrates a process of selecting a broadcast scene to be printed using a printing apparatus operating method according to an embodiment of the present general inventive concept; and
Figure 7 is a flowchart illustrating a printing apparatus operating method according to an embodiment of the present general inventive concept.

Reference will now be made in detail to the embodiments of the present general inventive concept, examples of which are illustrated in the accompanying drawings, wherein like reference numerals refer to the like elements throughout. The embodiments are described below in order to explain the present general inventive concept by referring to the figures.

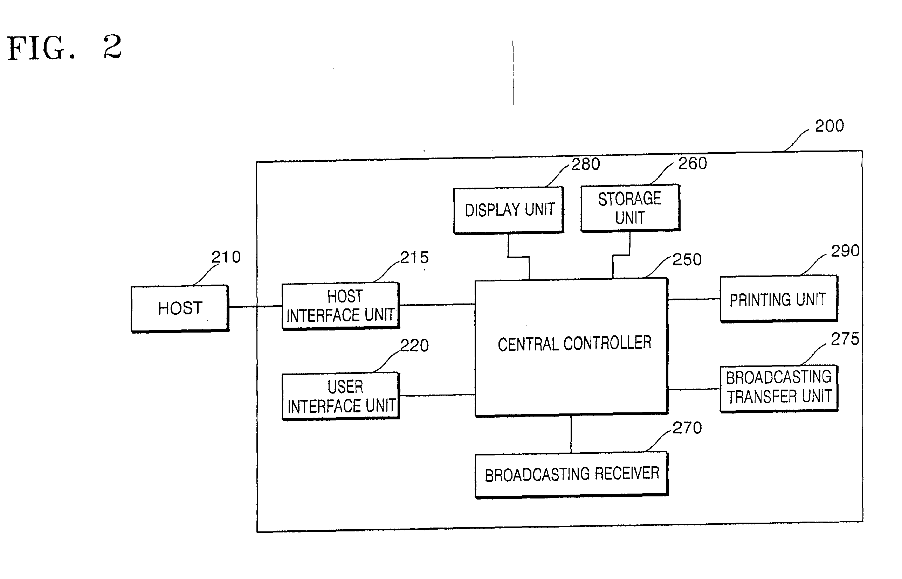

Figure 2 is a block diagram of a printing apparatus 200 according to an embodiment of the present general inventive concept.

Referring to Figure 2, the printing apparatus 200 can include a host interface unit 215 to communicate with an external host 210, a user interface unit 220 to receive user instructions, a display unit 280, a broadcast receiver 270, a broadcast transfer unit 275, a storage unit 260, a printing unit 290, and a central controller 250 that controls components of the printing apparatus 200 and can receive and process input data to be printed.

The host 210 transmits data to be printed to the printing apparatus 200, and is typically a PC. However, other types of hosts may be used. That is, the host 210 transmits data to be printed, which has been edited by a user, to the printing apparatus 200, and the printing apparatus 200 receives the transmitted information through the host interface unit 215. The host 210 can also be a digital camera, a digital camcorder, or a portable memory card, as an alternative to a PC. For example, an image captured by the user using a digital camera can be printed by being directly transmitted to the host interface unit 215. Examples of the host interface unit 215 are various, such as a serial port, a universal serial bus (USB) port, an infrared data association (IrDA) device, an IEEE1394 port, and so on, and the host interface unit 215 can also be implemented using, for example, WLAN or Bluetooth®.

The input data received through the host interface unit 215 is transmitted to the central controller 250. The central controller 250 converts the input data to printable output data for printing. The input data transmitted from the host 210 is generally a signal obtained by a printer driver processing a text document. The central controller 250 analyzes the signal (or input data) and converts the signal to image information, which can be printed by the printing unit 290. The user can control the central controller 250 to generate the output data by changing print settings through the user interface unit 220. For example, when the user wants to print only a portion of the input data transmitted through the host interface unit 215, the user can input a print command to print the portion of the input data through the user interface unit 220, and then the central controller 250 generates output data corresponding to the portion of the input data in response to the print command and outputs the output data to the printing unit 290. In this case, the user can check currently set print options through the display unit 280 and preview a print result according to the currently set print options.

Besides simply receiving input data from the host 210, the printing apparatus 200 can directly receive broadcast information from sources such as, for example, through the broadcast receiver 270. The received broadcast information can be transmitted to the display unit 280 through the central controller 250 and displayed for the user to view. In addition, the received broadcast information can be converted to printable output data by being received and processed by the central controller 250. The broadcast receiver 270 can receive various broadcast programs, such as, for example, DMB programs. In other words, the broadcast receiver 270 can transmit the received broadcast information to the central controller 250 as input data, and then the central controller 250 can convert the input data from the broadcast receiver 270 into printable output data.

DMB can be satellite DMB (S-DMB) or terrestrial DMB (T-DMB). S-DMB provides a DMB service transmitted by a "Mobile Broadcasting satellite (MBsat)," which is the first DMB satellite, and T-DMB provides a DMB service transmitted by a ground relay station such as current broadcast and radio services. T-DMB uses Ku-band, which is a high frequency band transmission, to uplink transmit broadcast content to the satellite, and S-band, which is a low frequency band transmission, to downlink and transmit the broadcast content from the satellite to the ground. A relay station which changes the frequency band of T-DMB is called a gap filler.
That is, when it is difficult to directly receive a satellite signal, the signal is transmitted from the satellite to a gap filler using Ku-band and from the gap filler to a subscriber's terminal using S-band.

In the current specification, Ku-band is a portion of K-band, and K-band generally has a frequency range of 10.9-36.0 GHz and includes Ka-band, Kj-band, and Ku-band. Ka-band has a frequency range of 26.5 - 40.0 GHz, Kj-band has a frequency range of 10.90 - 17.25 GHz, and Ku-band has a frequency range of 12.5 - 18.0 GHz. S-band has a frequency range of 1.55 - 5.2 GHz.

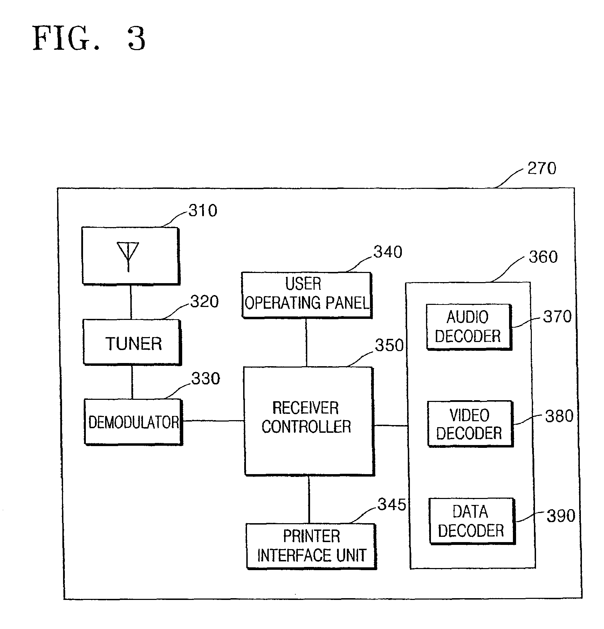

Currently, T-DMB dominates DMB services in Europe, whereas S-DMB dominates in the USA. Thus, the broadcast receiver 270 may be implemented to receive both S-DMB and T-DMB programs. The broadcast receiver 270 will be described in detail with reference to Figure 3.

The printing apparatus 200 can convert broadcast information received by the broadcast receiver 270 to output data in real time. If a job to convert the received broadcast information to output data is simultaneously performed, when the user selects print options, the output data can be printed without delay. However, since this job adds a calculation load to the central controller 250, the central controller 250 can provide the received broadcast information to the display unit 280 by not converting all of the received broadcast information. In this case, the central controller 250 stores a portion of the received broadcast information in the storage unit 260, and when the user inputs a print command, the central controller 250 can allow the user to select a desired image from among the broadcast information stored in the storage unit 260.

Various printing techniques can be applied to the printing unit 290, and this does not limit the present general inventive concept. However, the printing unit 290 may use a photo-printer technique to print a DMB program received by the broadcast receiver 270.

The broadcast transfer unit 275 transmits broadcast information displayed on the display unit 280 to an external device. The external device may be an in-car liquid crystal display (LCD) television, a home television, or a reproduction device such as a PDA or a personal multimedia player (PMP), for instance. The printing apparatus 200 can display broadcast information on a screen bigger than the built-in display unit 280 by including the broadcast transfer unit 275 as well as the broadcast receiver 270. Thus, the expandability of the printing apparatus 200 is improved. The broadcast transfer unit 275 can transmit broadcast information through an RGB signal output terminal for an external monitor, a D-sub terminal for a digital monitor, or a composite terminal, for example.

Figure 3 is a block diagram of the broadcast receiver 270 included in the printing apparatus 200 according to an embodiment of the present general inventive concept.

Referring to Figure 3, the broadcast receiver 270 can include a receiving unit 310 such as an antenna, a tuner 320, a demodulator 330, a user operation panel 340, and a receiver controller 350. The broadcast receiver 270 can further include a channel decoder 360 to decode a channel selected by the user, and a printer interface unit 345 to communicate with a printer. The operation of the components of the broadcast receiver 270 will now be described.

Orthogonal frequency division multiplexed (OFDM) signals are received through the receiving unit 310. The receiving unit 310 may be an omni-directional antenna. The tuner 320 selects a signal belonging to a desired frequency band among the OFDM signals received through the receiving unit 310. The signal selected by the tuner 320 is demodulated to a DMB transmission frame by the demodulator 330. The DMB transmission frame is transmitted to the receiver controller 350.

The user can select a desired channel from the received DMB signal using the user operation panel 340, and can change settings of image quality and volume of the received DMB signal. The receiver controller 350 transmits the DMB transmission frame to the channel decoder 360. The channel decoder 360 generates a service list by parsing fast information channel (FIC) data included in the DMB transmission frame. The FIC data includes multiplex configuration information (MCI), which contains information on the structure of each sub-channel, and service information (SI), which is additional information on each service. Thus, if the selected channel is analyzed, attribute information of ensemble and service is analyzed, thereby determining what service data is transmitted and what application is used for the service.

If the user selects the channel decoder 360 to decode data of a certain service using the user operation panel 340, an audio decoder 370, a video decoder 380, and a data decoder 390 included in the channel decoder 360 perform respective decoding operations. The decoded result is transmitted to the printer interface unit 345 via the receiver controller 350.

In particular, the broadcast receiver 270 can be implemented to receive all DMB programs used globally. For example, the broadcast receiver 270 may be implemented to be used for DMB in the Republic of Korea, Eureka-147 in Europe, and In-Band-On-Channel (IBOC) in USA.

In Eureka-147, which is widely used in Europe, a single channel (6 MHz) is divided into three frequency blocks. The valid bit rate per frequency block of DMB is 1.5-1.7 Mbps, and the bit rate actually used is around 1.2 Mbps considering a guard band for preventing interference and the overhead of error correction code (ECC).

IBOC is an in-band method for simultaneously carrying DMB and analog FM broadcast signals using an existing FM band. Thus, DMB has low implementation costs, but may be impeded by interference with analog FM broadcast and limited data rate.

In the Republic of Korea, technology for increasing frequency efficiency and providing a video service while moving (being mobile) has been developed by selecting OFDM-based Eureka-147 as a transmission standard of DMB and adding MPEG-4 compression and bit error correction. According to the T-DMB standard in the Republic of Korea, MPEG-1/2 Audio Layer II is used for a basic CD-grade audio service, and MPEG-4 part 10 is used for a multimedia service to realize VCD-grade image quality. MPEG-4 part 1 is used for a data service to provide a text and graphic service. In the Republic of Korea, DMB is provided based on a code division multiplexing (CDM) method. CDM is relatively robust against multi-path interference since CDM assigns different codes to a plurality of users simultaneously using the same frequency band, and is a transmission technology which used in mobile communication systems. In addition, by using the same transmission pattern from a satellite to a terminal and from a gap filler to a terminal, the structure of the terminal's receiver can be simplified.

As described above, although the broadcast receiver 270 may receive various types of DMB, the present general inventive concept is not limited to this, and the broadcast receiver 270 can also receive different kinds of broadcast signals.

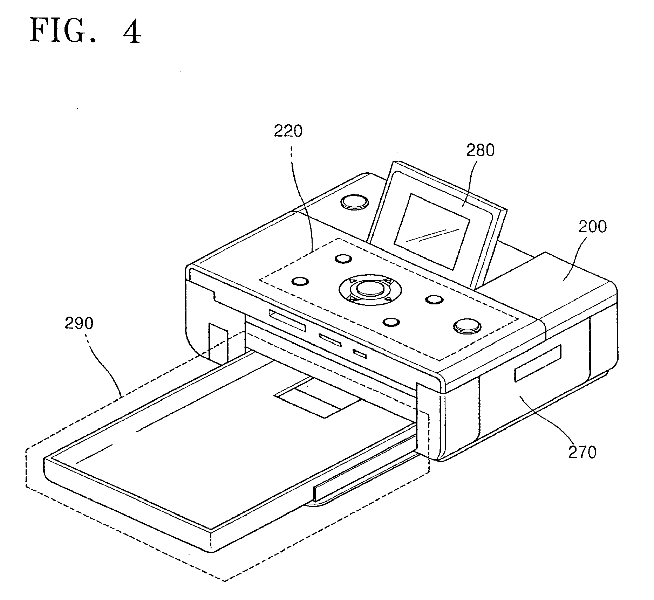

Figure 4 is a perspective view of the printing apparatus 200 according to an embodiment of the present general inventive concept.

As illustrated in Figure 4, the printing apparatus 200 includes the user interface unit 220, the display unit 280, a printing unit 290, and the broadcast receiver 270.

DMB information received by the broadcast receiver 270 is processed by a central controller (not illustrated) and transmitted to the printing unit 290 and the display unit 280. Since the display unit 280 can display DMB information, the user can enjoy a DMB program with high image quality.

In addition, when a desired scene is displayed, the user can input a print command using the user interface unit 220, and the printing unit 290 prints that scene.

As illustrated in Figure 4, since a portable printer can be used not only as a printer but also as a mobile broadcast receiver, user convenience and efficiency are improved. In addition, the broadcast receiver 270 can be integrated with or removable from the printing apparatus 200. If the broadcast receiver 270 is removable from the printing apparatus 200, the size and weight of the printing apparatus 200 can be reduced by separating the broadcast receiver 270 from the printing apparatus 200 when broadcast reception is unnecessary, and the portability of the printing apparatus 200 is increased more.

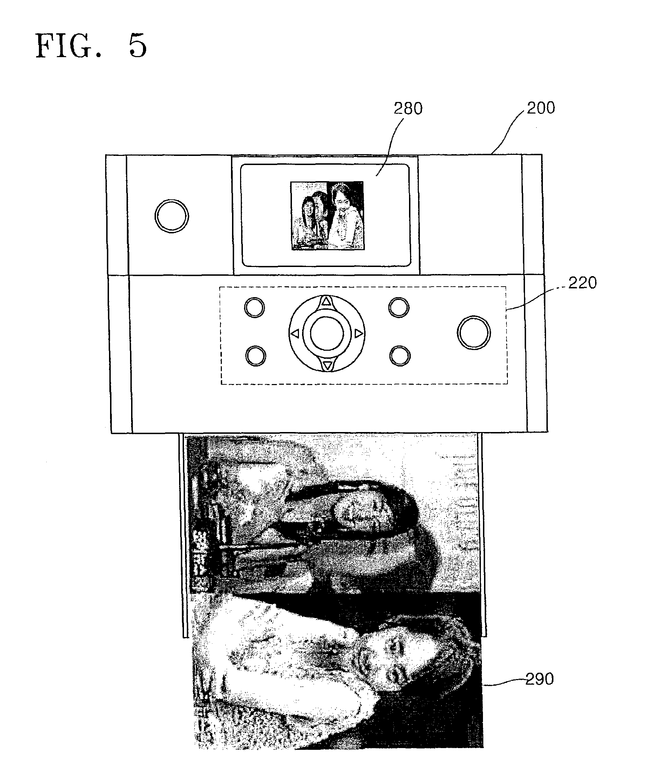

Figure 5 is a plan view explaining a function of immediately printing a broadcast scene in the printing apparatus 200 according to an embodiment of the present general inventive concept.

Referring to Figure 5, a user can watch a DMB program through the display unit 280 as usual.

When a desired scene or character is displayed on the screen, the user can input a print command using the user interface unit 220. Then, the printing unit 290 immediately prints the image selected by the user.

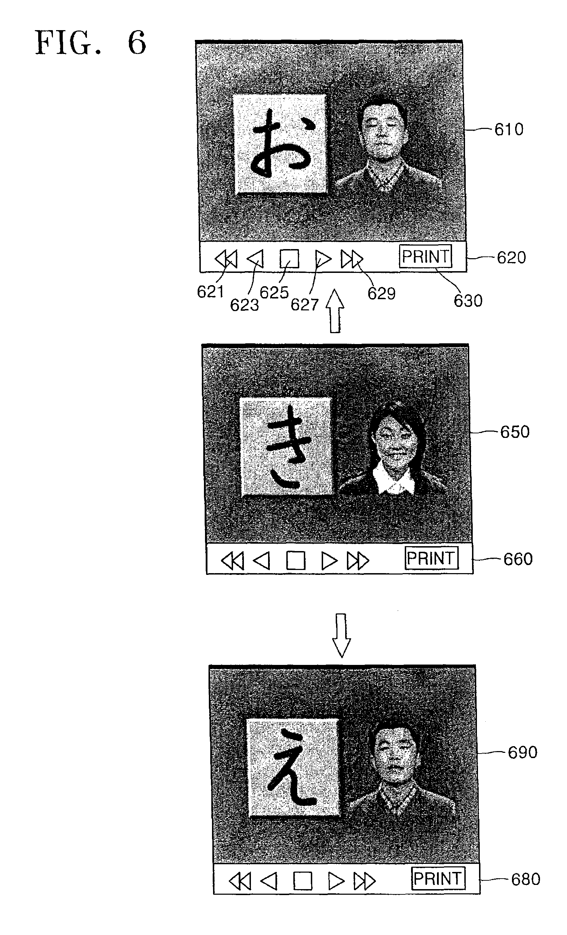

In this case, the printing unit 290 may allow the user to confirm the image to be printed to prevent an unwanted image from being printed by displaying the image to be printed on the display unit 280. In addition, as described above, the user can select a desired scene from DMB information stored in a storage unit (not shown) by operating the user interface unit 220 while watching the DMB information displayed on the display unit 280, and can also change printer settings such as the number of copies to print and print quality. A process of selecting the desired image will now be described in detail with reference to Figure 6.

Figure 6 is a diagram explaining a process of selecting a broadcast scene to be printed using a printing apparatus operating method according to an embodiment of the present general inventive concept.

First, second, and third image information 610, 650, and 690 illustrated in Figure 6 are broadcast information received by a broadcast receiver and image information displayed on a display unit. A user can select the displayed image information continuously or at intervals of a predetermined time.

The selected image information can be printed one image per page or reduced to fit several images per page. This print option can be selected by the user using a user interface unit as described above.

In addition, besides the print option, the present embodiment further includes first, second, and third operating options 620, 660, and 680 added to the displayed image information. That is, the user can select a desired option among the first, second, and third operating options 620, 660, and 680 displayed on the display unit using a touch screen method.

For example, it is assumed that the first image information 610 is currently displayed on the display unit and the user selects the first operating option 620. The first operating option 620 includes forward/backward fast search buttons 621 and 629, forward/backward slow search buttons 623 and 627, a stop button 625, and a print button 630. If the user presses one of the fast search buttons 621 and 629, image information stored in the storage unit is played at a relatively fast rate in the selected direction. In this case, the image information is quickly changed. The user can perform a finer search using the forward/backward slow search buttons 623 and 627, to pinpoint the image information which the user wants to print. When desired image information is found, the user can select that image information using the stop button 625, and can print the selected image information using the print button 630.

If the second image information 650 is displayed on the display unit, the user can display the first or third image information 610 or 690 using the forward/backward slow search buttons 623 and 627.

As illustrated in Figure 6, besides simply receiving and displaying broadcast information, the user can immediately print image information being broadcasted and accurately locate desired image information.

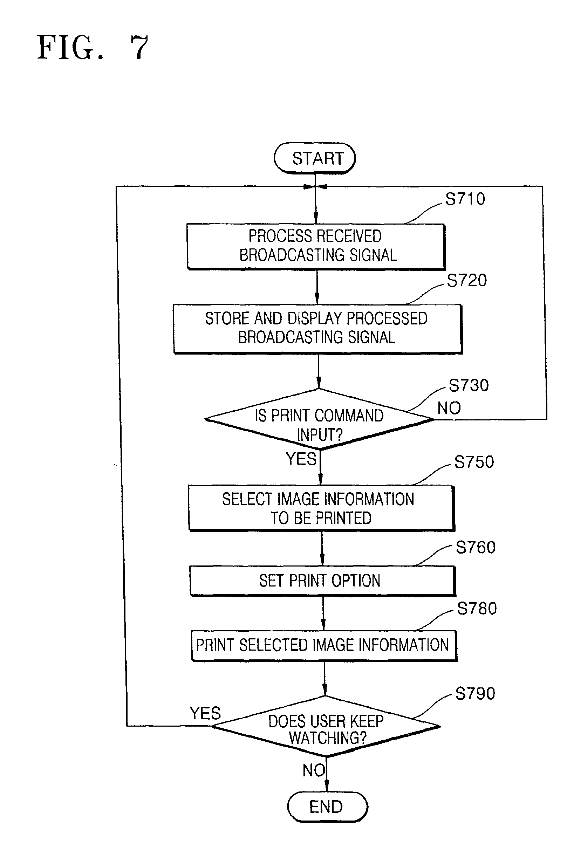

Figure 7 is a flowchart illustrating a printing apparatus operating method according to an embodiment of the present general inventive concept.

The printing apparatus operating method illustrated in Figure 7 is applied to a printing apparatus including a broadcast receiver, and may be applied to a printing apparatus implemented to receive DMB programs.

Referring to Figure 7, in operation S710, a signal transmitted from a broadcast station is received by a broadcast receiver and processed by a central controller. A printing apparatus can receive various kinds of broadcast information, and may receive DMB information. The received broadcast information can be converted to printable output data by the central controller and transmitted to a display unit. In operation S720, the display unit receives and displays the processed broadcast information.

In S730, it is determined whether a user inputs a print command while the printing apparatus receives and displays the broadcast information. If a print command is not input, the process of receiving and displaying subsequent broadcast information is repeated.

When the user wants to print image information, the user can input a print command by operating a user interface unit. Then, in operation S750, the printing apparatus allows the user to select output data to be printed by displaying the output data to be printed on the display unit. In this case, the user can select the user's most desired image information by searching forward or backward for image information stored in the storage unit as illustrated in Figure 6.

When image information to be printed is selected, in operation S760, the user can set a print option. The print option may include the number of copies to print, the print quality, the print mode, and the print size.

When the user sets the print option, in operation S780, the selected image information is printed using the set print option. In operation S790, it is determined whether the user continues to watch the broadcast program. If the user wants to continue watching the broadcast program, a subsequent broadcast signal is received.

Although only image information is displayed in Figure 6, a signal obtained by decoding a DMB program includes image information and data information. The data information may include a program schedule and a detailed description of the broadcast content. Thus, the user can select and print information on the program schedule instead of image information.

As described above, according to embodiments of the present general inventive concept, a user can receive various broadcast programs using a printing apparatus and print desired information on sight, thereby increasing user convenience.

Although a few embodiments of the present general inventive concept have been shown and described, it will be appreciated by those skilled in the art that changes may be made in these embodiments without departing from the principles of the general inventive concept, the scope of which is defined in the appended claims.

## Claims

1. A printing apparatus comprising:
means for receiving broadcast information and for providing the received broadcast information as input data;
means for converting received input data to printable output data;
means for displaying the input data; and
means for printing the output data.

2. The printing apparatus of claim 1, further comprising:
means for receiving input data from an external host and for providing the received input data to the conversion means;
means for allowing a user to input operating commands; and
means for storing the received broadcast information,
wherein the conversion means is arranged to retrieve broadcast information desired by the user from among the broadcast information stored in the storage means in response to an operating command of the user, and to convert the selected broadcast information to the output data.

3. The printing apparatus of claim 1 or 2, wherein the broadcast information comprises video information, audio information, and data information according to a digital multimedia broadcast (DMB) program, and
the conversion means is arranged to control the printing unit to print the image information or the data information.

4. The printing apparatus of claim 3, wherein the data information comprises at least one of a program schedule of content according to the DMB program and information of content.

5. The printing apparatus of any preceding claim, wherein the broadcast receiver comprises:
means for selecting a desired signal from among orthogonal frequency division multiplexing (OFDM) modulated signals received through an antenna;
means for demodulating the signal output from the selection means;
means for processing a DMB signal selected by a selection signal input from a user operating panel;
means for decoding the DMB signal corresponding to a selected channel; and
interface means for providing a signal decoded by the decoding means to the printing means,
wherein the decoding means comprises a video decoder, an audio decoder, and a data decoder to respectively decode the video information, the audio information, and the data information.

6. The printing apparatus of claim 2, wherein the external host comprises at least one of a computer providing video information, a camera arranged to capture video information, and a portable memory card arranged to store data.

7. The printing apparatus of claim 1, wherein the display means is a colour display device arranged to display the DMB program, and
the printing means is arranged to be capable of high quality photographic printing.

8. The printing apparatus of any preceding claim, further comprising a broadcast means for transmitting the broadcast information received by the receiving means to an external display device.

9. The printing apparatus of any preceding claim, wherein the broadcast means is removable from the printing apparatus.

10. A method of printing broadcast information received from a broadcast receiver using a printing apparatus comprising means for receiving broadcast information, the method comprising:
converting receivable input data into printable data, the input data including at least data received through an interface and broadcast data;
displaying the input data; and
printing the output data in response to a print command from a user interface.

11. The method of claim 10, further comprising:
storing portions of the received broadcast information; and when the print command is received, controlling the printing unit to print stored broadcast information selected by the print command.

12. A method according to claim 10 or 11, further comprising:
determining whether a print command is input from a user;
setting print settings if the print command is input; and
printing the displayed broadcast information according to the set print settings.

13. The method of claim 12, further comprising:
receiving input data from an external host, and wherein the operation of printing the displayed input data comprises:
inputting an operating command from a user; and
selecting input data desired by the user from among the input data in response to the operating command of the user.

14. The method of claim 10, 11, 12 or 13 wherein the input data comprises video information, audio information, and data information according to a digital multimedia broadcast (DMB) program, and
in the operation of printing the displayed input data, the video information or the data information is printed.

15. The method of claim 14, wherein the data information comprises at least one of a program schedule of content according to the DMB program and detailed information of content.

16. The method of any of claims 10 to 15, wherein the operation of converting, processing and displaying a received input data comprises:
selecting a signal from among orthogonal frequency division multiplexing (OFDM) modulated signals received through an antenna;
demodulating the selected signal; and
decoding a DMB signal corresponding to a channel selected by the user.

17. The method of claim 13, wherein the external host comprises at least one of a computer providing video information, a camera arranged to capture video information, and a portable memory card arranged to store input data.

18. The method of any of claims 10 to 17, wherein in the operation of displaying broadcast information corresponding to the processed broadcast signal, the broadcast information is displayed on a colour display device arranged to show the DMB program to a user, and in the operation of printing the displayed broadcast information, high quality photographic printing is performed.

19. The method of any of claims 10 to 18, further comprising:
transmitting the received broadcast information to an external display device.
